Europäisches Patentamt

European Patent Office

Office européen des brevets

(11) Publication number: **0 042 445**
**B1**

(12) **EUROPEAN PATENT SPECIFICATION**

(45) Date of publication of patent specification: **29.08.84**

(21) Application number: **80103284.8**

(22) Date of filing: **12.06.80**

(51) Int. Cl.³: **B 27 C 1/10**

(54) **Depth of cut adjustment mechanism.**

(43) Date of publication of application:
**30.12.81 Bulletin 81/52**

(45) Publication of the grant of the patent:
**29.08.84 Bulletin 84/35**

(84) Designated Contracting States:
**AT BE CH DE FR GB IT LI LU NL SE**

(56) References cited:
**CH-A- 263 087**
**DE-U-1 860 337**
**DE-U-7 013 796**
**US-A-1 432 860**
**US-A-1 527 785**
**US-A-1 812 755**
**US-A-2 746 499**
**US-A-2 771 105**
**US-A-2 774 399**
**US-A-3 407 857**

(73) Proprietor: **Black & Decker Inc.**
**Drummond Plaza Office Park 1423 Kirkwood Highway**
**Newark Delaware 19711 (US)**

(72) Inventor: **Bachmann, Rainer**
**Lindenstrasse 3**
**D-6209 Hohenstein (DE)**

(74) Representative: **UEXKÜLL & STOLBERG**
**Patentanwälte**
**Beselerstrasse 4**
**D-2000 Hamburg 52 (DE)**

Courier Press, Leamington Spa, England.

## Description

Background and Summary of the Invention

The present invention relates to portable power planers and in particular to an improved elevation adjusting arrangement for a power planer. In general, portable power planers comprise a motor driven rotary cutter head having one or more cutting blade assemblies disposed thereon for performing a cutting operation upon the surface of a workpiece as the cutter head rotates. The bottom surface of the tool comprises a fixed shoe located rearwardly of the cutter head and an adjustable shoe disposed forwardly of the cutter head. As the front shoe is adjusted upwardly or downwardly, the cutting depth of the cutting blade of the planer is adjusted accordingly.

Known elevation adjustment arrangements for power planers typically comprise a stud which extends upwardly from the front shoe through a boss having an adjustment cap threaded onto the top of the stud to move the shoe vertically upwardly or downwardly as the cap is turned. In general, however, no calibration is provided to indicate to the operator exactly and precisely the depth of cut setting. Also, fine adjustments generally cannot be made with conventional adjustment mechanisms.

In U.S. Patent 1,432,860 is disclosed a power planer having an adjustable front shoe which is adjusted in elevation by a bolt rotatably mounted in the housing of the planer and threadedly engaging a nut secured to the front shoe, rotation of the bolt being effected by a hand wheel mounted on the end thereof.

U.S. Patent 3,407,857 discloses a power planer having its front shoe adjustable in elevation by a handle rotating a cam operable to raise and lower the front shoe relative to a plate secured to the housing of the planer. The handle has an indicator which in conjunction with a scale on the top of the front shoe indicates the depth of cut. In order to calibrate the scale after the cutting blades have been re-sharpened, the plate relative to which the front shoe moves is adjustable in elevation; also, the rear, normally non-adjustable shoe is adjustable in elevation. Thus, after sharpening the cutting blades, first the rear shoe is adjusted, and then the front shoe plate is adjusted, these adjustments involving loosening bolts, carefully moving parts, and re-tightening bolts. This arrangement creates complexity in construction of the power planer, and a fairly elaborate procedure for calibrating the depth of cut scale.

Accordingly, it is one object of the present invention to provide an improved elevation adjusting arrangement for a power planer which includes an accurate and easily calibrated scale. Zero on the scale corresponds to the position of the adjustable shoe providing a zero depth of cut. The preferred embodiment of the present invention enables the operator to adjust the depth of the cut in 0.1 mm steps from 0 to 1.5 mm.

Another object of the present invention is to provide an improved elevation adjusting mechanism for a power planer which is highly stable and thus capable of accurate, fine adjustments in the depth of cut for more accuracy in cutting. The present invention accomplishes this by utilizing a double thread on a bolt engaging the stem of the adjustable shoe which permits the use of a steeper pitched thread to provide the desired range of elevational movement in the adjustable shoe with reduced rotational movement of the adjustment knob, while at the same time providing increased thread contact for improved stability.

Another object of the present invention is to provide an improved elevation adjusting mechanism having a positive "park" position wherein the adjustable shoe extends downwardly beyond the cutting blade of the cutting head so that the cutting blade does not mar the work surface when the power planer is set down.

According to the present invention there is provided a power planer having a housing incorporating a motor driven cutting blade disposed intermediate a rear shoe and an adjustable front shoe, a bolt threadedly engaged to said front shoe so that rotation of said bolt imparts vertical movement to said front shoe relative to said housing to effectively vary the depth of cut of said cutting blade, and selector means rotatable relative to said housing for rotating said bolt, characterized by said selector means having associated therewith a movable scale member provided with a scale referenced to a mark on said housing for providing an indication of the depth of the cut of said cutting blade, and coupling means for selectively coupling said movable scale member to said bolt for rotation therewith in any one of a plurality of selectable angular positions relative to said bolt to thereby permit accurate calibration of said movable scale member relative to said mark.

The adjustment bolt may comprise a double threaded bolt which extends downwardly into engagement with a corresponding internally double threaded stem extending upwardly from the front shoe of the planer.

Rotation of the bolt may be controlled by a knob attached to the head portion of the bolt. The knob in turn may have associated therewith a height adjustment scale which is capable of being readily calibrated by said coupling means wherein zero on the scale corresponds to the position of the adjustable front shoe providing zero depth of cut.

The adjustment means may provide a positively engageable park position wherein the front shoe is extended downwardly beyond the fixed shoe so that the cutting blade of the planer does not mar a smooth surface when the power planer is set to rest thereupon.

Other objects and advantages of the present invention will become apparaent from a reading of the detailed description of the preferred embodiment which makes reference to the following set of drawings in which:

Brief Description of the Drawings.

Figure 1 is an elevated view of a power planer incorporating the elevation adjusting arrangement of the present invention;

Figure 2 is a detail elevated view, partially in section, of the elevation adjusting arrangement of the present invention:

Figure 3 is an exploded view of the elevation adjusting arrangement shown in Figure 2;

Figure 4 is a detail view showing the interface between the ratchet springs and the ratchet disc in the elevation adjustment arrangement of the present invention;

Figure 5 is a front elevated view of the left-hand and right-hand housing portions of the power planer of the present invention;

Figure 6 is a plan view of the front portion of the housing of the power planer of the present invention; and

Figure 7 is an exploded perspective view of the elevation adjusting arrangement of the present invention.

Detailed Description of the Preferred Embodiment

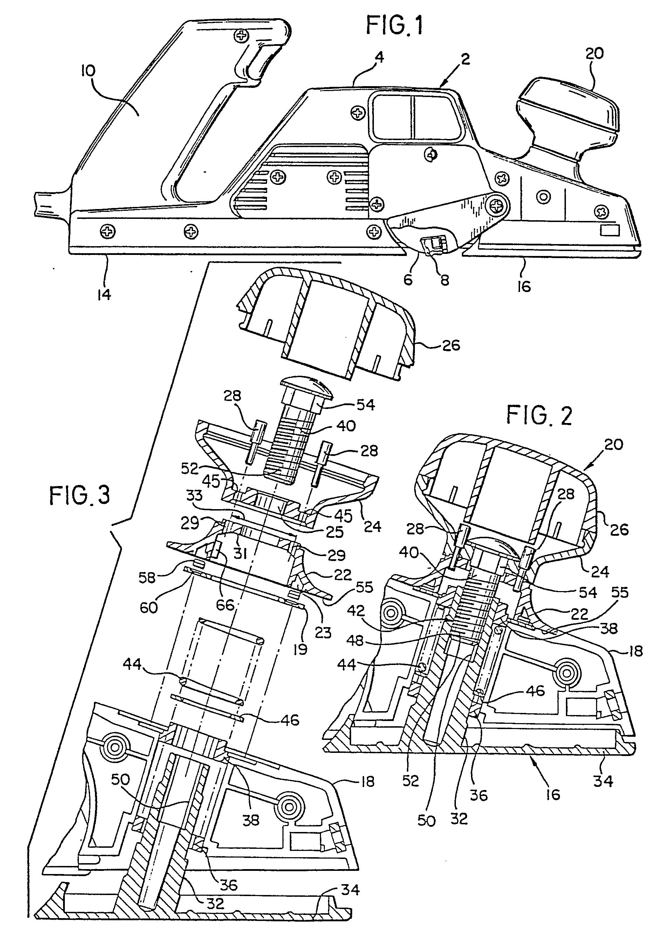

Referring to Figure 1, a power planer 2 incorporating an elevation adjusting mechanism according to the present invention is shown. The power planer 2 is otherwise conventional in overall layout, having a clamshell housing 4 which is shown partially cutaway to expose the cutter head 6 which supports at least one cutting blade 8. When in use, the operator grasps the tool by the rear handle 10 and knob 20 and moves the planer over the surface to be cut. The planer has a fixed shoe 14 and an adjustable front shoe 16 for engaging the work surface to be operated upon. The adjustable shoe 16 can be adjusted in elevation to control the depth to which the cutting blade 8 of the cutter head 6 penetrates the work.

Figure 2 is an elevated view, partially in section, showing the elevation adjusting arrangement of the present invention assembled into the right-hand portion 18 of the clamshell housing 4. The control knob assembly 20 comprises upper and lower halves 26 and 24 which are detachably clipped together as shown. The lower portion 24 of knob assembly 20 rests upon a flange 22 which has scale markings thereon and hence is referred to herein as a scale member. Removable pins 28, having a purpose to be described later, secure the lower knob half 24 to the scale member 22 to prevent rotation therebetween.

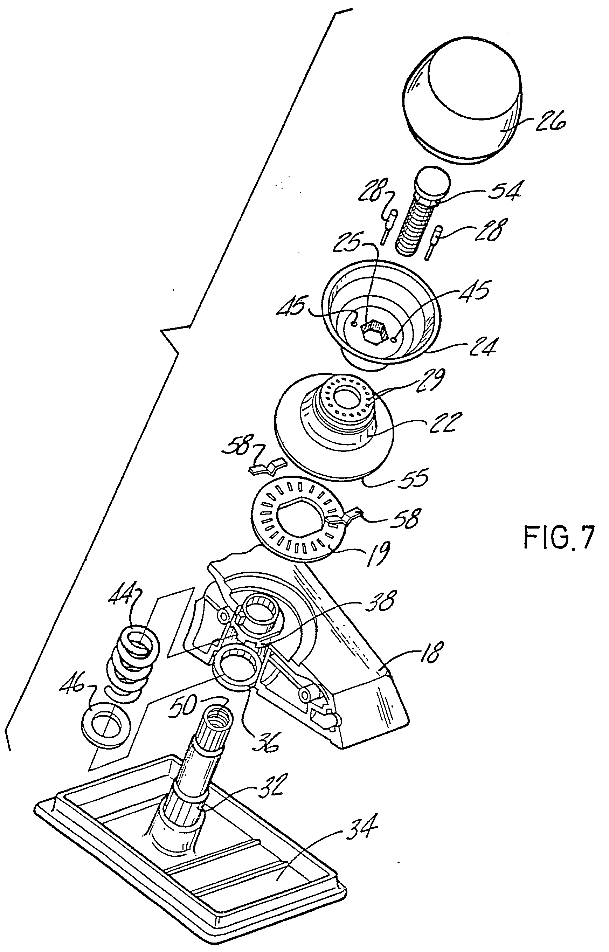

The adjustable shoe 16 is equipped with a stem 32 formed integrally with the base 34 thereof. The stem 32 engages sleeve bearings 36 and 38 integrally formed on the molded housing half 18, as best shown in Figure 7. The bearings 36 and 38 and stem 32 are formed with mutually engaging longitudinally extending surface flats 37 (Figures 5 and 7) to prevent rotation of adjustable shoe 16 with respect to housing 18.

A bolt 40 threadably engages the stem 32 at thread means 42 so that rotation of knob assembly 20 will result in vertical movement of adjustable shoe 16. In particular, when knob assembly 20 is rotated, the stem 32 is moved upwardly or downwardly in sleeve bearings 36 and 38 depending upon the direction of rotation of the knob 20.

Thread means 42 consists of a double thread 48 formed on the inner wall of bore 50 and a corresponding double thread 52 formed on the shank of bolt 40. The double threaded bolt 40 and stem 32 each have two threads whose distance apart is generally half of the true pitch of the threads. Hence, the double thread arrangement reduces the size of the thread necessary to maintain the core strength of the bolt and permits the use of a greater pitch to provide the desired range of elevational movement with less rotational movement of knob assembly 20. In the preferred bolt and bore arrangement, more thread contact will exist between the bolt and the bore to provide more frictional forces at the contact interface and thereby greater stability at a selected setting. Stability is particularly important for cutting accuracy when 0.1 mm elevational differences are desired and only 1.5 mm of elevational travel is scaled by the adjustment mechanism. In addition, it will be appreciated that the stability of the adjustment shoe 34 also insures a uniform depth of cut across the width of the power planer.

Bolt 40 is provided with a hexagonal head shank portion 54 which engages a corresponding hexagonal opening 25 in the lower knob half 24 of knob assembly 20 thereby keying the bolt 40 to the control knob 20. The insertion of bolt 40 into thread means 42 also rotatably mounts lower knob half 24 onto scale member 22. A compression spring 44 is interposed between the end-face of sleeve bearing 38 and a washer 46 seated upon a shoulder in the stem 32 of adjustable shoe 16. The washer 46 is required to provide a firm seat for spring 44 so that a proper bias force is maintained against stem 32.

Referring to Figure 5, the mutually engageable left-hand and right-hand housing halves 17 and 18 are shown. The housing halves 17 and 18 conjointly define an annular recess 9 having two flats 11 (only one of which is shown) formed at diametrically opposed locations on the inner recess wall 13 thereof. A ratchet disc 19 having a plurality of radially spaced notches 60 is seated in the recess 9 and keyed against rotation by the flats 11 (Figure 7).

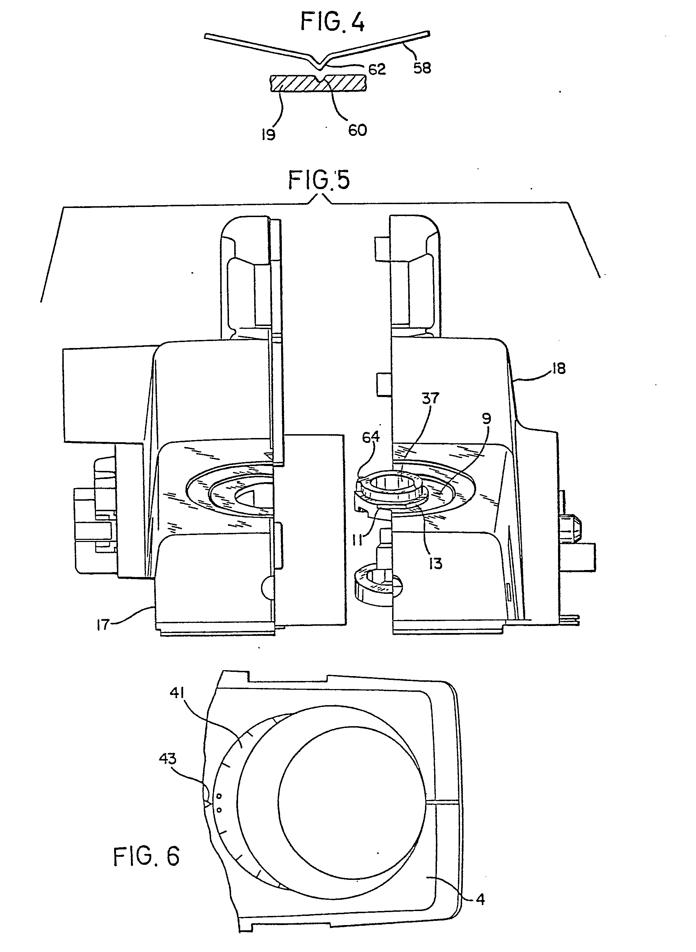

The scale member 22 is equipped with slotted openings 23 formed in the base 55 thereof for receiving two springs 58 juxtaposed across diametrically opposite arcs of circular scale member 22. With additional reference to Figure 4, springs 58 have an intermediate contact point 62 which protrudes from scale member 22. As the knob assembly 20 is rotated, the contact points 62 of springs 58 ratchet in the radial notches 60 of ratchet disc 19. The notches 60 are circumferentially spaced at predetermined angular increments. The spacing of the angular increments and the pitch of the thread means 42 are so selected that each angular increment corresponds to a 0.1 mm change in elevation of the adjustable shoe 16. The contact points 62 engage respective adjacent notches 60 for each incremental change in elevation of the shoe 16.

The engagement of the contact points 62 of the springs 48 with the notches 60 provides an audible "click" sound indicating to the operator each incremental change in elevation. Further, the resilient force developed by the springs 58 ensures that the knob assembly 20 stays firmly in the set position until deliberately changed by the operator.

The method of calibrating the elevation adjustment mechanism of the present invention will now be explained. With particular reference to Figures 2, 3 and 7, a plurality of apertures or bores 29 are formed in wall 31 of the scale member 22. In the preferred embodiment, twenty bores are used and are distributed about a circle having a diameter 33. Pins 28 are inserted through the apertures or bores 45 in lower knob half 24 into a selected pair of bores 29 in scale member 22 to secure the lower knob half 24 to scale member 22 and prevent rotational movement therebetween.

Accordingly, before the pins 28 are inserted in place, the lower knob half 24 is rotated until the adjustable shoe 16 is tangentially aligned with the lowermost point of blade travel. This, of course, corresponds to the zero depth of cut position. As best illustrated in Figure 6, scale member 22 has a notched scale 41 at the outer periphery thereof. A mark 43 formed on the housing 4 is utilized as a position indicator for the scale 41. With the adjustable shoe 16 at the zero elevation position, the scale member 22 is rotated until the zero elevation position of the scale 41 is aligned with the position indicator 43 on the housing 4. With the scale member 22 in this position, the pins 28 are then inserted, thereby keying the scale member 22 to the lower half 24 of knob assembly 20. The upper knob half 26 is then snapped onto the lower knob half 24 to prevent the pins 28 from becoming dislodged.

The elevation adjusting arrangement of the present invention also provides a positively located park position. In the park position, the adjustable shoe 16 is extended downwardly beyond the zero elevation position so that the cutting blade 8 of the cutter head 6 does not mar the surface upon which the power planer is set when not in use. To positively locate the adjustable shoe 16 in the park position, an abutment 64 is formed on the upper end face of the sleeve bearing 38 as shown in Figure 6. The scale member 22 is provided with a corresponding abutment key 66 along the interior surface thereof (Figure 3). Thus, when the knob assembly 20 is rotated past the zero elevation position in the counter-clockwise direction, key 66 will contact abutment 64, and thereby positively locate adjustable shoe 16 in the park position.

While the above description constitutes the preferred embodiment of the present invention, it will be appreciated that the invention is susceptible to modification, variation and change without departing from the proper scope of the accompanying claims.

## Claims

1. A power planer having a housing (4) incorporating a motor driven cutting blade (8) disposed intermediate a rear shoe (14) and an adjustable front shoe (16), a bolt (40) threadedly engaged to said front shoe (16) so that rotation of said bolt (40) imparts vertical movement to said front shoe (16) relative to said housing (4) to effectively vary the depth of cut of said cutting blade, and selector means (20) rotatable relative to said housing (4) for rotating said bolt (40), characterized by said selector means (20) having associated therewith a movable scale member (22) provided with a scale (41) referenced to a mark (43) on said housing (4) for providing an indication of the depth of cut of said cutting blade (8), and coupling means (25, 28, 29, 45) for selectively coupling said movable scale member (22) to said bolt (40) for rotation therewith in any one of a plurality of selectable angular positions relative to said bolt (40) to thereby permit accurate calibration of said movable scale member (22) relative to said mark (43).

2. The power planer of Claim 1, characterized in that said movable scale member (22) is located intermediate said selector means (20) and said housing (4) and comprises a flange (22) having said scale (41) thereon.

3. The power planer of Claim 1 or 2, characterized by ratchet means (19, 58, 60) associated with said selector means (20) for positively defining angular movement of said selector means in predetermined increments.

4. The power planer of Claim 3, characterized in that said ratchet means (19, 58, 60) comprises two springs (58) received in said movable scale member (22) and releasably engageable in notches (60) in a ratchet disc (19) held against rotation with said bolt (40).

5. The power planer of any preceding claim, characterized in that said bolt has a double thread (52) formed thereon threadedly engaging a corresponding double threaded portion (48) of said front shoe (16), whereby the cooperating double threads (52, 48) serve to increase the amount of vertical travel imparted to said front shoe (16) per degree of angular movement of said bolt (40) whole maintaining adequate thread contact between said bolt (40) and said front shoe threaded portion (48) to insure stability of said front shoe.

6. The power planer of any preceding claim, characterized by stop means (64, 66) for positively locating said selector means (20) in a predetermined angular position corresponding to said front shoe (16) being extended below the lowermost point of travel of said cutting blade (8).

7. The power planar of Claim 6, characterized in that said stop means (64, 66) is adapted to limit the rotation of said selector means (20) in one direction to said predetermined angular position.

8. The power planer of any preceding claim, characterized in that said coupling means (25, 28, 29, 49) comprises at least one pin (28) connected to said selector means (20) and insertable in one of a plurality of holes (29) formed in said movable scale member (22).

9. The power planer of Claim 8, characterized in that said selector means (20) comprises a knob (20) having upper (26) and lower (24) cooperating parts connected together, said lower part (24) having two holes (45) therein for accommodating two pins (28), and said upper part (26) preventing the pins (28) from becoming dislodged.

## Revendications

1. Un rabot à moteur comportant un carter (4) qui renferme une lame de coupe (8) entraînée par un moteur disposée entre une semelle arrière (14) et une semelle avant réglable (16), un boulon (40) vissé dans ladite semelle avant (16) de façon que la rotation dudit boulon (40) provoque un déplacement vertical de ladite semelle avant (16) par rapport audit carter (4) pour faire varier utilement la profondeur de coupe de ladite lame de coupe, et des moyens sélecteurs (20) que l'on peut déplacer en rotation par rapport audit carter (4) pour faire tourner ledit boulon (40), caractérisé par le fait qu'auxdits moyens sélecteurs (20) sont associés un organe gradué mobile (22) muni d'une échelle (41) positionnée par rapport à une marque (43) disposée sur ledit carter (4) pour fournir une indication de la profondeur de coupe de ladite lame de coupe (8) et des moyens d'accouplement (25, 28, 29, 45) pour accoupler sélectivement ledit organe gradué mobile (22) audit boulon (40) de façon qu'il tourne avec lui, dans l'une quelconque d'une série de positions angulaires sélectionnables par rapport audit boulon (40), afin de permettre ainsi un étalonnage précis dudit organe gradué mobile (22) par rapport à ladite marque (43).

2. Le rabot à moteur de la revendication 1, caractérisé en ce que ledit organe gradué mobile (22) est disposé entre lesdits moyens sélecteurs (20) et ledit boîtier (4) et est constitué par une collerette (22) qui porte ladite échelle (41).

3. Le rabot à moteur de la revendication 1 ou 2, caractérisé par des moyens à rochet (19, 58, 60) associés auxdits moyens sélecteurs (20) pour définir de manière certaine le mouvement angulaire desdits moyens sélecteurs en incréments prédéterminés.

4. Le rabot à moteur de la revendication 3, caractérisé en ce que lesdits moyens à rochet (19, 58, 60) comprenant deux ressort (58) reçus dans l'organe gradué mobile (22) et qui s'enclenchent de manière libérable dans des encoches (60) formées dans un disque (19) à rochet immobilisé de façon à ne pas tourner avec ledit boulon (40).

5. Le rabot à moteur d'une quelconque revendication précédente caractérisé en ce qu'un double filetage (52) est formé sur ledit boulon et est vissé dans une partie (48) comportant un double filetage correspondant de ladite semelle avant, de telle sorte que les doubles filetages coopérants (52, 48) servent à accroître la quantité mouvement vertical communiquée à ladite semelle avant (16) par degré de mouvement angulaire dudit boulon (40) tout en maintenant un contact entre filetages convenable entre ledit boulon (40) et ladite partie filetée (48) de la semelle avant pour assurer la stabilité de ladite semelle avant.

6. Le rabot à moteur d'une quelconque revendication précédente, caractérisé par des moyens d'arrêt (64, 66) pour positionner de manière certaine lesdits moyens sélecteurs (20) dans une position angulaire prédéterminée correspondant à un déplacement de ladite semelle avant (16) au-dessous dupoint le plus bas de la course de ladite lame de coupe (8).

7. Le rabot à moteur de la revendication 6, caractérisé en ce que lesdits moyens d'arrêt (64, 66) sont agencés de manière à limiter la rotation desdits moyens sélecteurs (20), dans un sens, à ladite position angulaire prédéterminée.

8. Le rabot à moteur d'une quelconque revendication précédente, caractérisé en ce que les moyens d'accouplement (25, 28, 29, 49) comprennent au moins une goupille (28) assemblée auxdits moyens sélecteurs (20) et susceptible d'être introduite dans l'un des trous d'une série de trous (29) formés dans l'organe gradué mobile (22).

9. Le rabot à moteur de la revendication 8, caractérisé en ce que lesdits moyens sélecteurs (20) sont constitués par un bouton (20) ayant des parties supérieure (26) et inférieure (24) coopérantes assemblées entre elles, ladite partie inférieure (24) comportant deux trous (45) pour recevoir deux goupilles (28) et ladite partie supérieure (26) empêchant que les goupilles (28) puissent être délogées.

## Patentansprüche

1. Motorgetriebener Hobel mit einem Gehäuse (4), in dem sich zwichen einem hinteren Schuh (14) und einem einstellbaren vorderen Schuh (16) ein motorgetriebenes Schneidblatt (18) befindet, mit einem in Schraubeingriff mit dem vorderen Schuh (16) stehenden Bolzen (40), so daß eine Drehung des Bolzens (40) eine Vertikalbewegung des vorderen Schuhs (60) bezüglich des Gehäuses (4) bewirkt, um die Schneidtiefe des Schneidblattes wirksam zu verändern, und mit bezüglich des Gehäuses (4) drehbaren Wahlmitteln (20) zur Drehung des Bolzens (40), dadurch gekennzeichnet, daß den Wahlmitteln (20) ein bewegbares Skalenelement (22) zugeordnet ist, das eine Skala (41) aufweist, die auf eine Marke (43) am Gehäuse (4) bezogen ist, um eine Anzeige der Schnittiefe des Schneidblattes (8) zu geben, und daß Kupplungsmittel (28, 29, 45) zur wahlweisen Kupplung des bewegbaren Skalenelementes (22) mit dem Bolzen (40) zur Drehung mit diesem in irgendeine von mehreren wählbaren Winkelstellungen bezüglich des Bolzens (40) vorgesehen sind, um eine genaue Kalibrierung des bewegbaren Skalenelementes (22) bezüglich der Marke (43) zu gestatten.

2. Motorgetriebener Hobel nach Anspruch 1, dadurch gekennzeichnet, daß das bewegbare Skalenelement (22) sich zwischen den Wahlmitteln (20) und dem Gehäuse (4) befindet und einen Flansch (22) aufweist, auf dem sich die Skala (41) befindet.

3. Motorgetriebener Hobel nach Anspruch 1 oder 2, gekennzeichnet durch den Wahlmitteln (20) zugeordnete Ratschenmittel (19, 58, 60) zur formschlüssigen Festlegung der Winkelbewegung der Wahlmittel in vorbestimmten Schritten.

4. Motorgetriebener Hobel nach Anspruch 3, dadurch gekennzeichnet, daß die Ratschenmittel (19, 58, 60) zwei Federn (58) aufweisen, die im bewegbaren Skalenelement (22) aufgenommen sind und in lösbarem Eingriff mit Einschnitten (60) in einer Ratschenscheibe (19) bringbar sind, die gegen Drehung mit dem Bolzen (40) gehalten ist.

5. Motorgetriebener Hobel nach einem der vorhergehenden Ansprüche, dadurch gekennzeichnet, daß der Bolzen ein Doppelgewinde (52) aufweist, das in Schraubeingriff mit einem entsprechenden Doppelgewindebereich (48) des vorderen Schuhs (16) steht, wodurch die zusammenwirkenden Doppelgewinde (52, 58) zur Vergrößerung der Strecke der Vertikalbewegung des vorderen Schuhs (16) pro Grad Winkelbewegung des Bolzens (40) dienen, während angemessener Gewindekontakt zwischen dem Bolzen (40) und dem Gewindebereich (48) des vorderen Schuhs aufrechterhalten wird, um die Stabilität des vorderen Schuhs sicherzustellen.

6. Motorgetriebener Hobel nach einem der vorhergehenden Ansprüche, gekennzeichnet durch Anschlagmittel (64, 66) zur zwangsweisen Positionierung der Wahlmittel (20) in einer vorbestimmten Winkelstellung entsprechend der Erstreckung des vorderen Schuhs (16) über den unteren Verlagerungspunkt des Schneidblattes (8) hinaus.

7. Motorgetriebener Hobel nach Anspruch 6, dadurch gekennzeichnet, daß die Anschlagmittel (64, 66) geeignet sind, die Drehung der Wahlmittel (20) in einer Richtung in die vorbestimmte Winkelstellung zu begrenzen.

8. Motorgetriebener Hobel nach einem der vorhergehenden Ansprüche, dadurch gekennzeichnet, daß die Kupplungsmittel (25, 28, 29, 49) mindestens eine Zapfen (28) aufweisen der mit den Wahlmitteln (20) verbunden und in eines von mehreren, im bewegbaren Skalenelement (22) gebildeten Löchern (29) einsetzbar ist.

9. Motorgetriebener Hobel nach Anspruch 8, dadurch gekennzeichnet, daß die Wahlmittel (20) einen Knopf (20) mit miteinander verbundenen oberen (26) und unteren (24) zusammenarbeitenden Teilen aufweisen, wobei das untere Teil (24) zwei Löcher (45) zur Aufnahme zweier Zapfen (28) hat und das obere Teil (26) die Verlagerung der Zapfen (28) verhindert.

FIG.1

10

4 2 20

6 8 16

14

FIG.2

26

28 54

40

28

52 45

33

29

31

58

60 66

44

50

38

36

32 34

20

28

26

24

54 55

22

38

18

46

52

50 32

36

16

34

FIG.3

25

24

45

29

22

55

19

23

46

18

38

42

48

44

1

FIG. 4

62
58
19
60

FIG. 5

18
37
9
64
11
13
17

41
43
FIG. 6
4

FIG.7